# EUROPEAN PATENT APPLICATION

(11) **EP 2 910 712 A1**
(43) Date of publication of application: **26.08.2015**
(21) Application number: 13847176.8
(22) Date of filing: 11.10.2013
(51) Int. Cl.: E04H 9/16, E01H 5/10, H02J 3/00

(54) **SNOW MELTING CONTROLLER AND SNOW MELTING MANAGING SYSTEM COMPRISING SNOW MELTING CONTROLLER**

(30) Priority: 19.10.2012 JP 2012232371
(71) Applicant: Panasonic Intellectual Property Management Co., Ltd., Osaka-shi, Osaka 540-6207 (JP)
(72) Inventor: MISE, Atsushi, Osaka-shi, Osaka 540-6207 (JP); BABA, Akira, Osaka-shi, Osaka 540-6207 (JP); SOGO, Tomoya, Osaka-shi, Osaka 540-6207 (JP); OGAWA, Takeshi, Osaka-shi, Osaka 540-6207 (JP); TOKUNAGA, Yoshihiko, Osaka-shi, Osaka 540-6207 (JP)
(74) Representative: Appelt, Christian W.
(86) International application number: PCT/JP2013/006106
(87) International publication number: WO 2014/061255

(57) **Abstract**

The snow melting controller according to the present invention is a snow melting controller configured to manage multiple snow melting devices located in multiple areas, and is configured to perform a decreasing process of decreasing a total power consumption of the multiple snow melting devices. The snow melting controller is configured to, in the decreasing process, determine a decreasing degree of a power consumption of a snow melting device for each of the multiple areas, based on an amount of snow cover and meteorological information of each of the multiple areas.

## Description

### Technical Field

The present invention relates to snow melting controllers and snow melting managing systems, and in particular relates to a snow melting controller for controlling multiple snow melting devices located in multiple areas and a snow melting managing system including the snow melting controller.

### Background Art

In the past, there has been used a snow melting device for melting snow on residences and roads. The snow melting device is constituted by a heater for converting electric power into thermal force. The recent snow melting device performs various controls such as starting and ending snow melting and adjusting the degree of snow melting, based on detection results of snow cover situations, meteorological situations, road surface temperatures, and frozen situations (see e.g., document 1 [JP 2008-150898 A]).

When power supply from a commercial power system becomes unstable and thus power supply from the commercial power system becomes insufficient relative to power demand of the commercial power system, a power blackout of the commercial power system may occur. In view of this, to reduce power consumptions of the snow melting devices, there has been proposed an idea to decrease the power consumptions of all the snow melting devices by the same amount.

However, environments such as snow cover situations and meteorological situations are different between regions. Therefore, when the power consumptions of all the snow melting devices are decreased by the same amount, in some regions sufficient snow melting is unlikely to be performed resulting from shortage of power, and in some regions power more than necessary for snow melting is likely to be supplied because of differences in snow cover situations and meteorological situations between the regions. Hence, users in the region in which sufficient snow melting cannot be performed due to shortage of power tend to feel injustice in distribution of power for melting snow in the process of decreasing power consumptions.

### Summary of Invention

In view of the above insufficiency, the objective of the present invention is to propose a snow melting controller and a snow melting managing system which are capable of decreasing feelings of injustice of users in distribution of power for melting snow in a process of decreasing power consumptions.

The snow melting controller according to the first aspect is a snow melting controller configured to manage multiple snow melting devices located in multiple areas. The snow melting controller is configured to perform a decreasing process of decreasing a total power consumption of the multiple snow melting devices. The snow melting controller is configured to, in the decreasing process, determine a decreasing degree of a power consumption of a snow melting device for each of the multiple areas, based on an amount of snow cover and meteorological information of each of the multiple areas.

In the snow melting controller according to the second aspect realized in combination with the first aspect, the snow melting controller is configured to decrease a power consumption of a snow melting device in accordance with a decreasing degree with regard to each of the multiple areas.

The snow melting controller according to the third aspect realized in combination with the second aspect, further includes: multiple slave controllers configured to individually control the multiple snow melting devices; and a master controller configured to communicate with the multiple slave controllers. The master controller is configured to perform the decreasing process. The master controller is configured to send a decreasing degree to a slave controller located in an area associated with the decreasing degree. Each of the multiple slave controllers is configured to, when receiving the decreasing degree, decrease a power consumption of a corresponding one of the multiple snow melting devices in accordance with the received decreasing degree.

In the snow melting controller according to the fourth aspect realized in combination with any one of the first to third aspects, the snow melting controller is configured to, in the decreasing process, increase the decreasing degree of the power consumption with a decrease in the amount of snow cover.

In the snow melting controller according to the fifth aspect realized in combination with any one of the first to fourth aspects, the meteorological information contains an atmosphere temperature. The snow melting controller is configured to, in the decreasing process, increase a decreasing degree of a power consumption with an increase in the atmosphere temperature.

In the snow melting controller according to the sixth aspect realized in combination with any one of the first to fifth aspects, the multiple areas include a particular area in which multiple particular snow melting devices are located. The multiple particular snow melting devices are individually located in multiple spaces in the particular area. The snow melting controller is configured to determine a decreasing degree of a power consumption of a particular snow melting device for each of the multiple spaces, based on attribute information of a user of each of the multiple spaces.

In the snow melting controller according to the seventh aspect realized in combination with the sixth aspect, each of the multiple spaces is a residence. The user is a resident of the residence. The attribute information contains at least one of a sex, an age, and a health condition of the resident.

In the snow melting controller according to the eighth aspect realized in combination with any one of the first to fifth aspects, the multiple areas include a particular area in which multiple particular snow melting devices are located. The multiple particular snow melting devices are individually located in multiple spaces in the particular area. The snow melting controller is configured to determine a decreasing degree of a power consumption of a particular snow melting device for each of the multiple spaces, based on activity information of a user of each of the multiple spaces.

In the snow melting controller according to the ninth aspect realized in combination with the eighth aspect, each of the multiple spaces is a residence. The user is a resident of the residence. The activity information is information indicative of whether the resident is present in the residence.

In the snow melting controller according to the tenth aspect realized in combination with any one of the first to ninth aspects, the snow melting controller is configured to perform cooperative control of controlling a certain snow melting device of the multiple snow melting devices in cooperation with a particular device.

In the snow melting controller according to the eleventh aspect realized in combination with the tenth aspect, the particular device is a device to receive power from a power source same as a power source for supplying power to the certain snow melting device. The snow melting controller is configured to, in the cooperative control, control the certain snow melting device and the particular device so that a time period in which a power consumption of the certain snow melting device peaks does not overlap a time period in which a power consumption of the particular device peaks.

In the snow melting controller according to the twelfth aspect realized in combination with any one of the first to eleventh aspects, the snow melting controller is configured to, when receiving a demand response signal of requesting of performing the decreasing process, perform the decreasing process.

In the snow melting controller according to the thirteenth aspect realized in combination with the twelfth aspect, the demand response signal includes information on a decreasing time period allowing the snow melting controller to perform the decreasing process. The snow melting controller is configured to allow a snow melting device to operate at a power equal to or more than a predetermined power in a predetermined time period prior to the decreasing time period and decrease a power consumption of this snow melting device in accordance with the decreasing degree in the decreasing time period.

In the snow melting controller according to the fourteenth aspect realized in combination with the twelfth aspect, the demand response signal includes information on a decreasing time period allowing the snow melting controller to perform the decreasing process. The snow melting controller is configured to allow multiple snow melting devices located in the same area to operate in turn in the decreasing time period.

The snow melting managing system according to the fifteenth aspect includes the snow melting controller according to any one of the first to fourteenth aspects and at least one information obtaining device configured to obtain an amount of snow cover and meteorological information of each of multiple areas and provide the amount of snow cover and the meteorological information of each of multiple areas to the snow melting controller.

### Brief Description of the Drawings

**FIG. 1** is a block diagram illustrating the configuration of the snow melting managing system of Embodiment 1.
**FIG. 2** is a graph illustrating a change in a power consumption of the snow melting managing system of Embodiment 1.
**FIG. 3** is a table illustrating changes in the power consumptions of the snow melting managing system of Embodiment 1.
**FIG. 4** is a block diagram illustrating part of the configuration of the snow melting managing system of Embodiment 2.
**FIG. 5** is a table illustrating changes in power consumptions of the snow melting managing system of Embodiment 2.
**FIG. 6** is a block diagram illustrating the configuration of the snow melting managing system of Embodiment 3.
**FIG. 7** is a block diagram illustrating part of the configuration of the snow melting managing system of Embodiment 3.
**FIG. 8** is a table illustrating changes in power consumptions of the snow melting managing system of Embodiment 3.
**FIG. 9** is a waveform chart illustrating control of the snow melting managing system of Embodiment 3.
**FIG. 10** is a block diagram illustrating part of the configuration of the snow melting managing system of Embodiment 4.
**FIG. 11** is a waveform chart illustrating cooperative control of the snow melting managing system of Embodiment 4.
**FIG. 12** is a table illustrating priorities of electric devices of the snow melting managing system of Embodiment 4.
**FIG. 13** is a waveform chart illustrating control of the snow melting device of Embodiment 5.
**FIG. 14** is a waveform chart illustrating different control of the snow melting device of Embodiment 5.

### Description of Embodiments

### (Embodiment 1)

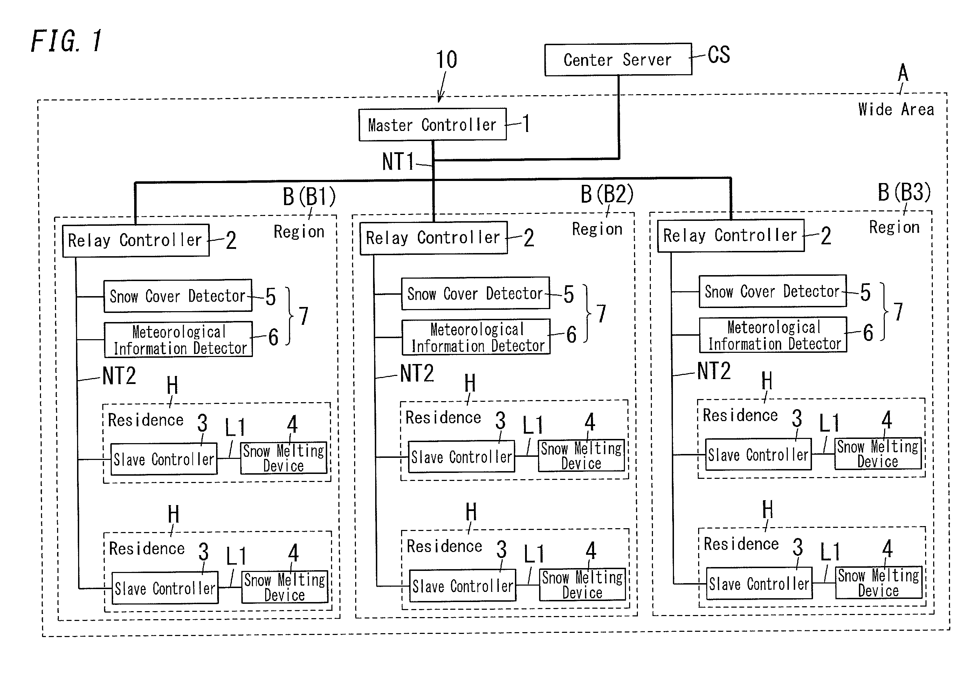

As shown in **FIG. 1****,** the snow melting managing system of the present embodiment includes multiple information obtaining devices **7** located in multiple (three, in the present embodiment) areas (regions) **B (B1** to **B3),** and a snow melting controller **10** configured to manage multiple (six, in the present embodiment) snow melting devices (snow removal devices) **4** located in the multiple areas **B.**

The information obtaining device 7 is configured to obtain an amount of snow cover and meteorological information and provide the obtained amount of snow cover and the obtained meteorological information to the snow melting controller **10.**

The snow melting controller **10** is configured to perform a decreasing process of decreasing a total power consumption of the multiple snow melting devices **4.** The snow melting controller **10** is configured to, in the decreasing process, decide a decreasing degree of a power consumption of a snow melting device **4** for each of the multiple areas **B,** based on an amount of snow cover and meteorological information of each of the multiple areas **B.** For example, the decreasing degree of a power consumption is a decreasing rate of a power consumption (power consumption decreasing rate). The decreasing rate is defined as a rate of power to be decreased (a power consumption decreasing amount) to a current power consumption. The snow melting controller **10** is configured to, when determining the decreasing degree, decrease a power consumption of a snow melting device **4** in accordance with the decreasing degree for each of the multiple areas **B.**

**FIG. 1** shows a configuration of the snow melting managing system of the present embodiment. The snow melting managing system manages power required for melting snow in a wide area **A.**

The wide area **A** is constituted by the multiple regions **B1** to **B3** (multiple areas). In each of the areas **B1** to **B3,** one or more residences **H** exist (in **FIG. 1****,** two residences **H** are in each of the areas **B1** to **B3).** In other words, the snow melting managing system of the present embodiment is installed in the wide area A. The wide area **A** includes the multiple (three, in the present embodiment) areas (regions) **B (B1** to **B3).** The multiple areas **B** include multiple spaces (residences **H).**

Further, a master controller **1** is provided to the wide area **A.** A relay controller **2** is provided to each of the regions **B1** to **B3.** In each residence **H,** a slave controller **3** and the snow melting device **4** are provided. Note that, functions of the master controller **1,** the relay controllers **2,** and the slave controllers 3 constitute a function of the snow melting controller **10.**

In the present embodiment, the snow melting controller **10** includes the master controller **1,** the multiple (three, in the present embodiment) relay controllers **2,** and the multiple (six, in the present embodiment) slave controllers **3.**

The master controller **1** is located in the wide area **A.** The master controller **1** is configured to perform the decreasing process. The master controller **1** is configured to send the decreasing degree to a slave controller 3 located in an area **B** associated with the decreasing degree.

The multiple relay controllers **2** are individually located in the multiple areas (regions) **B.** The relay controller **2** is configured to relay signals between the master controller **1** and the slave controller **3** located in the same area **B** as the relay controller **2.**

The multiple slave controllers **3** are individually located in the multiple spaces (residences **H).** The slave controller **3** is configured to control the snow melting device **4** located in the same space (residence **H)** as the slave controller **3.** The slave controller **3** is configured to, when receiving the decreasing degree, decrease a power consumption of the snow melting device **4** in accordance with the decreasing degree.

Note that, the snow melting controller **10** is not limited to having the aforementioned configuration. For example, the snow melting controller **10** may be configured so that the master controller **1** serves as the relay controller **2,** or that the master controller **1** serves as the relay controller **2** and the slave controller **3.**

In the wide area **A,** the master controller **1** and each relay controller **2** are configured to communicate with each other via a wide area communication network **NT1** including the Internet.

In each of the regions **B1** to **B3,** the relay controller **2** and the slave controller **3** are configured to communicate with each other via a local network **NT2.**

In each residence **H,** the slave controller **3** and each snow melting device **4** are configured to communicate with each other via a control line **L1.** The slave controller **3** controls operation of each snow melting device **4.**

The snow melting device **4** is constituted by a heater operating with electric power. The snow melting device **4** has a function of converting electric energy into thermal energy to melt snow such as snow on a roof of a residence **H** and snow surrounding the residence **H.**

Further, in the regions **B1** to **B3,** snow cover detectors **5** are individually connected to local networks **NT2,** and detect amounts of snow cover in the regions **B1** to **B3.** The snow cover detector 5 sends a detection result of the amount of snow cover (amount of snow cover information) to the relay controller 2 as an upper device.

Further, in the regions **B1** to **B3,** meteorological information detectors **6** are individually connected to the local networks **NT2,** and detect pieces of meteorological information in the regions **B1** to **B3.** The meteorological information is information on a meteorological phenomenon such as a temperature, a humidity, and an amount of snowfall. The meteorological information detector 6 sends a detection result of the meteorological information to the relay controller 2 as the upper device.

The snow cover detector **5** and the meteorological information detector **6** constitute the information obtaining device **7.** The information obtaining device **7** is configured to send the amount of snow cover and the meteorological information to the relay controller **2** located in the same area **B** as the information obtaining device **7.**

The following explanation is made to operation of the snow melting managing system of the present embodiment.

First, the relay controller **2** of each of the regions **B1** to **B3** sends to the master controller **1** the amount of snow cover information and the meteorological information respectively received from the snow cover detector **5** and the meteorological information detector **6.** In other words, the relay controller **2** sends to the master controller **1** the amount of snow cover information and the meteorological information of the region which the relay controller **2** manages. The master controller **1** obtains amount of snow cover information and meteorological information of each of the regions **B1** to **B3.**

Further, the slave controller **3** monitors a power consumption of the snow melting device **4** as a control target, and sends power consumption data of the snow melting device **4** to the relay controller **2** as the upper device periodically.

Additionally, the relay controllers **2** of the regions **B1** to **B3** send power consumption data of the snow melting devices **4** in the regions **B1** to **B3** to the master controller **1** as the upper device, respectively.

In other words, the master controller **1** can obtain a power consumption of a snow melting device **4** for each of the regions **B1** to **B3.** Note that, the power consumption data of the snow melting device **4** which is sent by the relay controller **2** to the master controller **1 is** a sum of power consumptions of the snow melting devices **4** of each of the regions **B1** to **B3,** or individual power consumptions of the snow melting devices **4** of each of the regions **B1** to **B3.**

The master controller **1** is configured to communicate with a center server CS of a power company through the wide area communication network **NT1.**

When a supply amount of power is likely to exceed a demand amount, the power company requests consumers in a supply range to reduce their power consumptions in order to reduce a peak of power demand.

For example, the center server CS sends a demand response signal (hereinafter, referred to as a DR signal, if necessary) to the master controller 1, and thereby requests the master controller **1** to decrease a power consumption. The DR signal contains information on a desired decreasing value Pm of a total power consumption defined as a sum of power consumptions of the snow melting devices **4** in the wide area A under control of the master controller **1.** The DR signal is a signal for requesting the snow melting controller **10** to perform the decreasing process.

When receiving the DR signal, the master controller **1** determines that need to decrease the power consumption in the wide area **A** constituted by the regions **B1** to **B3** arises. To achieve the desired decreasing value Pm of the total power consumption in the wide area **A,** the master controller **1** determines power consumptions to be allocated to the regions **B1** to **B3.** In other words, the snow melting controller **10** (the master controller 1) performs the decreasing process in response to reception of the demand response signal for requesting execution of the decreasing process.

In more concrete example, to achieve the desired decreasing value Pm of the total power consumption in the wide area **A,** the master controller **1** calculates the decreasing degrees of the power consumptions of the regions **B1** to **B3** based on pieces of the amount of snow cover information and pieces of the meteorological information of the regions **B1** to **B3.**

The master controller **1** determines that the need to use the snow melting device **4** is higher with regard to a region having a larger amount of snow cover and a lower atmosphere temperature, and thus decreases the decreasing rate of the power consumption. In other words, in the decreasing process, the master controller **1** decreases the decreasing degree (decreasing rate) of the power consumption with an increase in the amount of snow cover. Further, in the decreasing process, the master controller **1** decreases the decreasing degree (decreasing rate) of the power consumption with a decrease in the atmosphere temperature.

In contrast, the master controller **1** determines that the need to use the snow melting device **4** is lower with regard to a region having a smaller amount of snow cover and a higher atmosphere temperature, and thus increases the decreasing rate of the power consumption. In other words, in the decreasing process, the master controller **1** increases the decreasing degree (decreasing rate) of the power consumption with a decrease in the amount of snow cover. Further, in the decreasing process, the master controller **1** increases the decreasing degree (decreasing rate) of the power consumption with an increase in the atmosphere temperature.

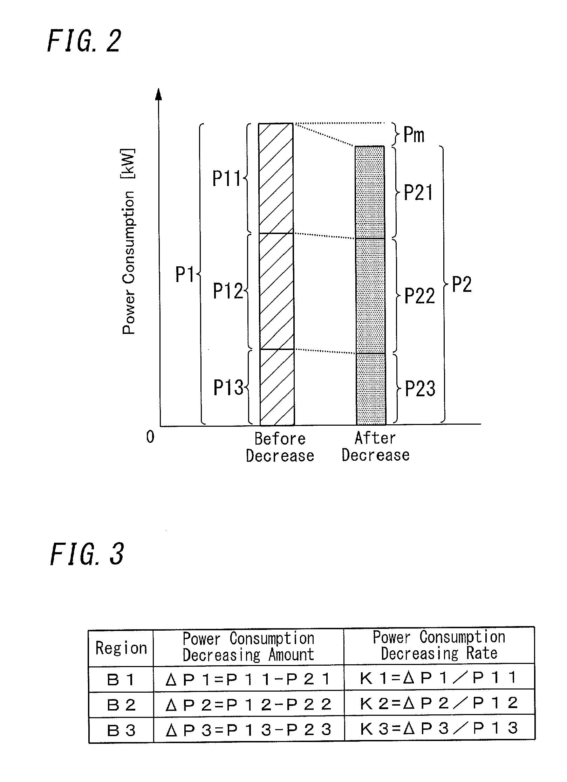

For example, as shown in **FIG. 2****,** the total power consumption in the wide area **A** before the center server **CS** sends the DR signal (before decreases in power consumptions) is supposed to be **P1.** The total power consumption **P1** consists of a power consumption **P11** of the region **B1,** a power consumption **P12** of the region **B2,** and a power consumption **P13** of the region **B3.** In other words, the total power consumption is the sum of power consumptions of the multiple snow melting devices 4 located in the wide area A.

When receiving the DR signal from the center server **CS,** the master controller **1** decreases power consumptions to be allocated to the regions **B1** to **B3** (after decreases in power consumptions). In other words, the master controller **1** executes the decreasing process. For example, the master controller **1** allocates the power consumptions **P21 (<P11), P22 (<P12),** and **P23 (<P13)** to the regions **B1, B2,** and **B3,** respectively.

In this regard, when the power consumption decreasing amount **ΔP1** of the region **B1** is supposed to be equal to **P11** minus **P21,** the power consumption decreasing amount **ΔP2** of the region **B2** is supposed to be equal to **P12** minus **P22,** and the power consumption decreasing amount **ΔP3** of the region **B3** is supposed to be equal to **P13** minus **P23** (see **FIG. 3****),** the desired decreasing value Pm is equal to **ΔP1** plus **ΔP2** plus **ΔP3.** Additionally, the total power consumption **P2** after decreases in power consumptions is equal to **P1** minus Pm which is equal to **P21** plus **P22** plus **P23.**

In this case, the power consumption decreasing rate **K1** of the region **B1** is equal to **ΔP1/P11,** the power consumption decreasing rate **K2** of the region **B2** is equal to **ΔP2/P12,** and the power consumption decreasing rate **K3** of the region **B3** is equal to **ΔP3/P13** (see **FIG. 3****).**

The master controller 1 determines power consumption decreasing rates **K1** to **K3** of the regions **B1** to **B3,** based on the amount of snow cover information and the meteorological information of the regions **B1** to **B3.** For example, when the amount of snow cover of the region **B1** is larger than the amounts of snow cover of the regions **B2** and **B3,** and the atmosphere temperature of the region **B1** is lower than the atmosphere temperatures of the regions **B2** and **B3,** the power consumption decreasing rate **K1** of the region **B1** is set to be smaller than the power consumption decreasing rates **K2** and **K3** of the region **B2** and **B3.**

Thereafter, the master controller 1 sends information on the power consumption decreasing rate **K1** to the relay controller 2 of the region **B1,** and sends information on the power consumption decreasing rate **K2** to the relay controller **2** of the region **B2,** and sends information on the power consumption decreasing rate **K3** to the relay controller **2** of the region **B3.**

The relay controller **2** of the region **B1** sends the information on the power consumption decreasing rate **K1** to each slave controller **3** in the region **B1.** The relay controller **2** of the region **B2** sends the information on the power consumption decreasing rate **K2** to each slave controller **3** in the region **B2.** The relay controller **2** of the region **B3** sends the information on the power consumption decreasing rate **K3** to each slave controller **3** in the region **B3.**

Each slave controller **3** in the region **B1** decreases the power consumption of the snow melting device **4** as the associated control target by the power consumption decreasing rate **K1.** Each slave controller **3** in the region **B2** decreases the power consumption of the snow melting device **4** as the associated control target by the power consumption decreasing rate **K2.** Each slave controller **3** in the region **B3** decreases the power consumption of the snow melting device **4 as** the associated control target by the power consumption decreasing rate **K3.**

Thus, the decrease in the total power consumption in the wide area A by the desired decreasing value Pm can be achieved. Further, the decreasing rate of the power consumption is determined for each of the regions **B1** to **B3** based on the amount of snow cover and the meteorological information of each region. Therefore, it is possible to decrease feelings of injustice of users in distribution of power for melting snow in a process of decreasing power consumptions.

As described above, the snow melting managing system of the present embodiment is a snow melting managing system for managing at least one snow melting device **4** located in each area (region) **B,** and includes at least one information obtaining device **7** and a snow melting controller **10.** The at least one information obtaining device **7** is configured to obtain information on an amount of snow cover of each area **B and** meteorological information of each area **B.** The snow melting controller 10 is configured to, when the need to decrease a power consumption in the multiple areas **B** arises, determine a decreasing degree (decreasing rate) of a power consumption of a snow melting device **4** for each area **B.**

Further, in the snow melting managing system of the present embodiment, the snow melting controller **10** is configured to, when receiving the demand response signal of requesting a decrease in the power consumption in the multiple areas **B,** determine that the need to decrease the power consumption in the multiple areas **B** arises.

Additionally, the snow melting controller **10** of the present embodiment is a snow melting controller for managing at least one snow melting device **4** located in each area **B.** The snow melting controller **10** is configured to, when the need to decrease a power consumption in the multiple areas **B** arises, determine a decreasing degree of a power consumption of a snow melting device **4** for each area **B.**

In other words, the snow melting controller **10** of the present embodiment includes the following first to sixth features. Note that, the second to sixth features are optional.

According to the first feature, the snow melting controller **10** is a snow melting controller configured to manage multiple snow melting devices **4** located in multiple areas (regions) B, and is configured to perform a decreasing process of decreasing a total power consumption of the multiple snow melting devices **4.** The snow melting controller **10** is configured to, in the decreasing process, determine a decreasing degree (decreasing rate) of a power consumption of a snow melting device **4** for each of the multiple areas **B,** based on an amount of snow cover and meteorological information of each of the multiple areas **B.**

According to the second feature realized in combination with the first feature, the snow melting controller **10** is configured to decrease a power consumption of a snow melting device **4** in accordance with a decreasing degree with regard to each of the multiple areas **B.**

According to the third feature realized in combination with the second feature, the snow melting controller **10** further includes: multiple slave controllers **3** configured to individually control the multiple snow melting devices **4;** and a master controller **1** configured to communicate with the multiple slave controllers **3.** The master controller **1** is configured to perform the decreasing process. The master controller **1** is configured to send a decreasing degree to a slave controller **3** located in an area **B** associated with the decreasing degree. Each of the multiple slave controllers 3 is configured to, when receiving the decreasing degree, decrease a power consumption of a corresponding one of the multiple snow melting devices 4 in accordance with the received decreasing degree.

According to the fourth feature realized in combination with any one of the first to third features, the snow melting controller **10** is configured to, in the decreasing process, increase the decreasing degree of the power consumption with a decrease in the amount of snow cover.

According to the fifth feature realized in combination with any one of the first to fourth features, the meteorological information contains an atmosphere temperature. The snow melting controller **10** is configured to, in the decreasing process, increase the decreasing degree of the power consumption with an increase in the atmosphere temperature.

According to the sixth feature realized in combination with any one of the first to fifth features, the snow melting controller **10** is configured to, when receiving a demand response signal of requesting of performing the decreasing process, perform the decreasing process.

The snow melting managing system of the present embodiment includes the aforementioned snow melting controller **10** and at least one information obtaining device 7 configured to obtain an amount of snow cover and meteorological information of each of multiple areas **B** and provide the amount of snow cover and the meteorological information of each of multiple areas **B** to the snow melting controller **10.**

As described above, each of the snow melting controller 10 and the snow melting managing system of the present embodiment determines a decreasing ratio (decreasing degree) of a power consumption for each area **B** based on an amount of snow cover of each area **B** and meteorological information of each area **B.** Therefore, in a process of decreasing power consumptions, it is possible to decrease feelings of injustice of users in distribution of power for melting snow in a process of decreasing power consumptions.

### (Embodiment 2)

The snow melting managing system of the present embodiment includes the same components as Embodiment 1, and the same components are designated by the same reference signs and explanations thereof are omitted.

The snow melting controller **10** of the present embodiment is configured to perform a distribution process of determining a decreasing degree of a power consumption of a snow melting device **4** for each of multiple spaces (residences **H),** based on attribute information of users of multiple spaces (residences **H).** In the present embodiment, the distribution process is performed by a relay controller 2.

The relay controller **2** of the present embodiment preliminarily holds the attribute information of a resident of each residence **H** in a region which the relay controller **2** manages. This attribute information contains information such as an age, a sex, and a health condition of a resident of each residence **H.** In other words, the attribute information contains at least one of a sex, an age, and a health condition of the resident. When receiving information on the power consumption decreasing rate from the master controller 1, the relay controller **2** determines, based on the attribute information of the resident of the residence **H,** a distribution of the power consumptions of the snow melting devices **4** located in the residences **H** in the region **B** which the relay controller **2** manages.

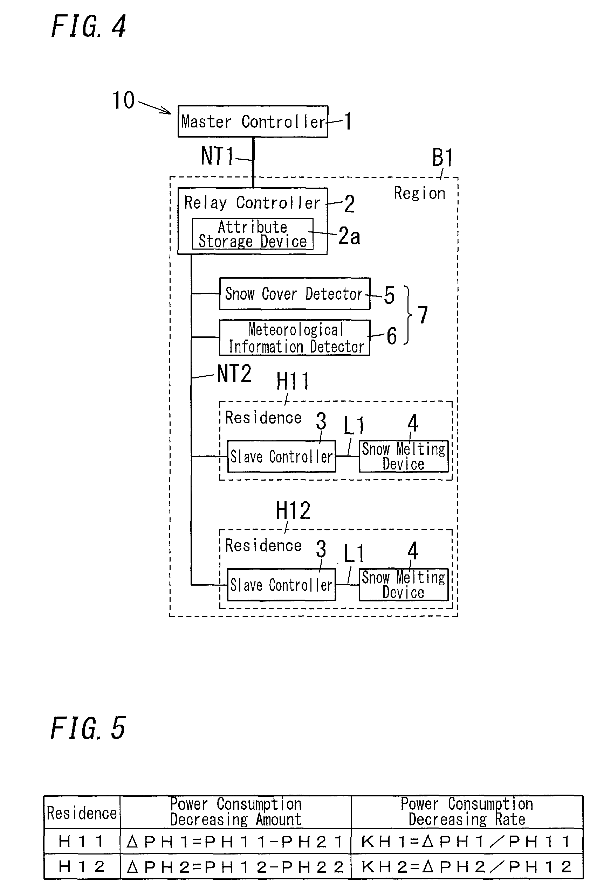

Hereinafter, the present embodiment is described with reference to the configuration of the region **B1** shown in **FIG.** 4. Note that, in order to distinguish the two residences **H** in the region **B1,** they are referred to as the residences **H11** and **H12.** The region (area) **B1** is a particular area in which multiple (two, in the illustrated example) snow melting devices (particular snow melting devices) **4** are located. The multiple particular snow melting devices **4** are individually located in multiple spaces (residences **H).**

First, the relay controller 2 includes an attribute storage device **2a** configured to store attribute information of at least one resident of each of the residences **H11** and **H12** in the region **B1**. The relay controller 2 periodically receives data on the power consumptions of the snow melting devices **4** of the residences **H11** and **H12** from the slave controllers 3 of the residences **H11** and **H12,** and therefore can use data on the power consumptions of the snow melting devices **4** of the residences **H11** and **H12.** Further, the relay controller 2 receives information on the power consumption decreasing rate **K1** of the region **B1** from the master controller **1.**

When receiving the information on the power consumption decreasing rate **K1,** the relay controller **2** determines the power consumptions to be allocated to the snow melting devices **4** of the residences **H11** and **H12** in order to achieve the power consumption decreasing rate **K1** of the region **B1.**

In more detail, to achieve the power consumption decreasing rate **K1** of the region **B1,** the relay controller **2** determines the decreasing rates of the power consumptions of the individual residences **H11** and **H12,** based on the attribute information of the residents of the residences **H11** and **H12.**

For example, the relay controller 2 determines that the need for the snow melting device **4** is high for a residence **H** in which the minimum age of the residents is in an age range of elderly persons, and thus decreases the decreasing rate of the power consumption. Alternatively, the relay controller **2** determines that the need for the snow melting device **4** is high for a residence **H** in which all the residents are female, and thus decreases the decreasing rate of the power consumption. Alternatively, the relay controller **2** determines that the need for the snow melting device **4** is low for a residence **H** in which the residents include one or more late middle age parsons, and thus increases the decreasing rate of the power consumption. Similarly, the relay controller **2** determines that the need for the snow melting device **4** is low for a residence **H** in which all the residents are male, and thus increases the decreasing rate of the power consumption.

For example, the power consumptions in the residences **H11** and **H12** before the center server **CS** sends the **DR** signal are supposed to be **PH11** and **PH12,** respectively.

When the center server **CS** sends the **DR** signal and then the relay controller **2** receives information on the power consumption decreasing rate **K1** from the master controller **1,** the relay controller **2** decreases the power consumption to be allocated to the residences **H11** and **H12.**

In more detail, the relay controller 2 allocates the power consumptions **PH21 (<PH11)** and **PH22 (<PH12)** to the residences **H11** and **H12,** respectively. In this regard, when the power consumption decreasing amount **ΔPH1** of the residence **H11** is supposed to be equal to **PH11** minus **PH21,** and the power consumption decreasing amount **ΔPH2** of the residence **H12** is supposed to be equal to **PH12** minus **PH22** (see **FIG. 5****),** the power consumption decreasing amount **ΔP1** of the region **B1** is equal to **ΔPH1** plus **ΔPH2.**

In this case, the power consumption decreasing rate **KH1** of the residence **H11** is equal to **ΔPH1/PH11** and the power consumption decreasing rate **KH2** of the residence **H2** is equal to **ΔPH2/PH12** (see **FIG. 5****).** Additionally, the relay controller **2** determines the power consumption decreasing rates **KH1** and **KH2** of the respective residences **H11** and **H12** based on the attribute information of the residents of the respective residences **H11** and **H12.**

For, example, when the minimum age of the residents of the residence **H11** is in the age range of elderly persons, and the residents of the residence **H12** include one or more late middle persons, the power consumption decreasing rate **KH1** of the residence **H11** is set to be lower than the power consumption decreasing rate **KH2** of the residence **H12.**

The relay controller **2** sends information on the power consumption decreasing rate **KH1** to the slave controller **3** of the residence **H11**, and sends information on the power consumption decreasing rate **KH2** to the slave controller 3 of the residence **H12.**

As a result, the slave controller **3** of the residence **H11** decreases the power consumption of the snow melting device **4** as the associated control target by the power consumption decreasing rate **KH1.** Additionally, the slave controller **3** in the residence **H12** decreases the power consumption of the snow melting device **4** as the associated control target by the power consumption decreasing rate **KH2.**

Note that, similarly, in each of the regions **B2** and **B3,** the controller 2 determines a decreasing rate of a power consumption of each residence **H** based on attribute information of each residence **H.**

As apparent from the above, the decreasing rates of the power consumptions in the residences **H** are determined based on the attribute information of the residents of the residences **H.** Therefore, it is possible to decrease feelings of injustice of users in distribution of power for melting snow in a process of decreasing power consumptions.

As described above, the snow melting controller 10 determines a decreasing degree of a power consumption of a snow melting device **4** for each space (residence H), based on an amount of snow cover of each area **B,** meteorological information of each area **B,** and attribute information of users in each space (residences **H)** in which a snow melting device **4** is located.

In other words, the snow melting controller **10** of the present embodiment includes the following seventh and eighth features in addition to the aforementioned first to sixth features. Note that, in the present embodiment, the second to sixth and eighth features are optional.

In the seventh feature, the multiple areas B include a particular area in which multiple particular snow melting devices **4** are located. The multiple particular snow melting devices **4** are individually located in multiple spaces (residences **H)** in the particular area. The snow melting controller **10** is configured to decide a decreasing degree of a power consumption of a particular snow melting device **4** for each of the multiple spaces (residences **H),** based on attribute information of at least one user of each of the multiple spaces (residences **H).**

In the eighth feature realized in combination with the seventh feature, each of the multiple spaces is a residence **H.** The user is a resident of the residence **H.** The attribute information contains at least one of a sex, an age, and a health condition of the resident.

Further, the snow melting managing system of the present embodiment includes the aforementioned snow melting controller **10** and at least one information obtaining device 7 configured to obtain an amount of snow cover and meteorological information of each of multiple areas **B** and provide the amount of snow cover and the meteorological information of each of multiple areas B to the snow melting controller 10.

### (Embodiment 3)

The snow melting managing system of the present embodiment includes the same components as Embodiment 1, and the same components are designated by the same reference signs and explanations thereof are omitted.

The snow melting controller **10** of the present embodiment is configured to perform a distribution process of determining a decreasing degree of a power consumption of a snow melting device **4** for each of the multiple spaces (residences **H),** based on activity information of a user of each of the multiple spaces (residences **H).** In the present embodiment, the distribution process is executed by the relay controller **2.**

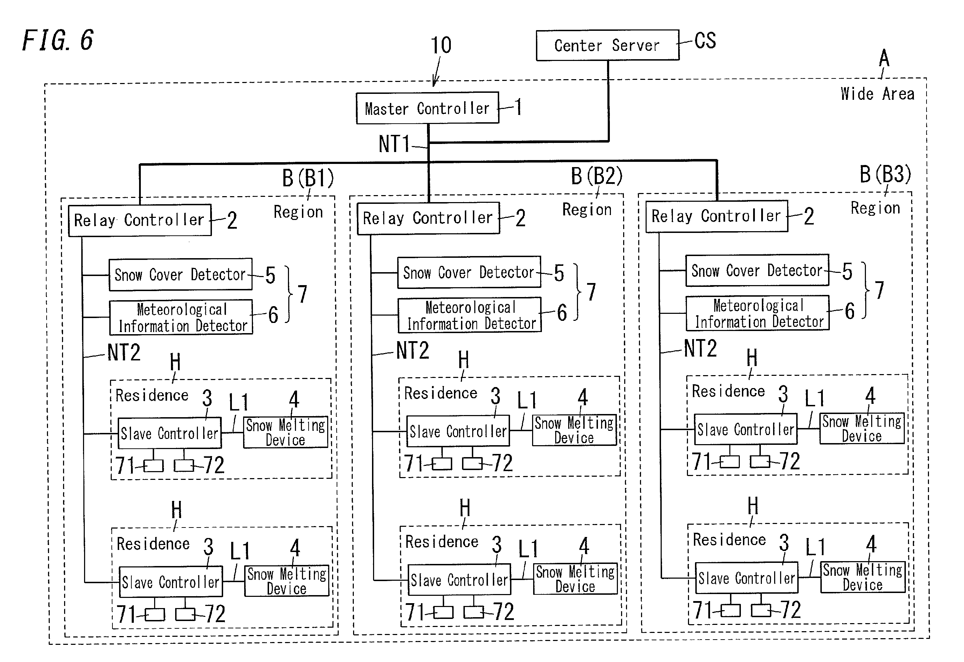

As shown in **FIG. 6****,** to obtain the activity information of the resident, a stay-at-home information obtaining device **71** and an entering-and-leaving information obtaining device **72** are provided to each residence **H** of the present embodiment. In each residence **H,** the stay-at-home information obtaining device **71** and the entering-and-leaving information obtaining device **72** are connected to the slave controller 3.

The stay-at-home information obtaining device **71** has a function of obtaining the activity information defined as information (stay-at-home information) on whether a resident is present in a residence **H,** and of sending this stay-at-home information to the slave controller **3.**

The stay-at-home information obtaining device **71** may be a scheduler (e.g., a personal computer, a portable information device, and a control panel) or a human sensor, for example.

The scheduler has a function of allowing the resident of the residence **H** to input and set an outgoing schedule. The scheduler sends the stay-at-home information to the slave controller 3 based on the set outgoing schedule.

The human sensor is constituted by a pyroelectric sensor for detecting a person in the residence H, for example. The human sensor sends the stay-at-home information to the slave controller 3 based on the detection result.

The stay-at-home information obtaining device **71** is constituted by one or more of the scheduler, the human sensor, and the like.

The entering-and-leaving information obtaining device **72** has a function of obtaining the activity information defined as information (entering-and-leaving information) on whether an automobile enters or leaves a parking space of the residence **H,** and of sending this entering-and-leaving information to the slave controller **3.**

The entering-and-leaving information obtaining device **72** may be an automobile use scheduler (e.g., a personal computer, a portable information device, and a control panel), automobile detector such as a photoelectric sensor provided in a garage, or a charger for electric vehicles, for example.

The automobile use scheduler has a function of allowing the resident of the residence H to input and set an automobile use schedule which is a schedule of uses of automobiles. The automobile use scheduler sends the entering-and-leaving information to the slave controller 3 based on the set automobile use schedule.

The automobile detector detects an automobile in a parking space, and sends the entering-and-leaving information to the slave controller 3 based on the detection result.

The charger for electric vehicles sends the entering-and-leaving information to the slave controller 3 based on whether an automobile to be charged is present.

The entering-and-leaving information obtaining device 72 is constituted by one or more of the automobile use scheduler, the automobile detector, the charger, and the like.

The slave controller 3 sends the received activity information (the stay-at-home information and the entering-and-leaving information) to the relay controller **2** serving as the upper device.

The relay controller 2 determines a living activity (presence or absence) of a resident in each residence **H** in the region **B** which the relay controller 2 manages, based on the received stay-at-home information and the received entering-and-leaving information. The relay controller 2 performs the following operations based on the living activity of the resident of the residence **H.**

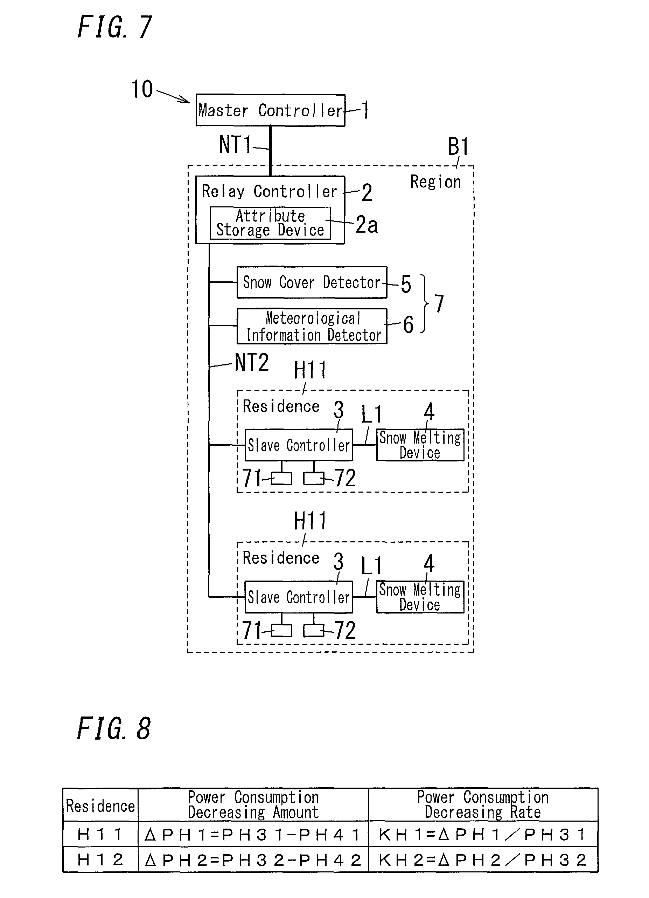

Hereinafter, the present embodiment is described with reference to the configuration of the region **B1** shown in **FIG. 7****.** Note that, in order to distinguish the two residences **H** in the region **B1**, they are referred to as the residences **H11** and **H12.** The region (area) **B1** is a particular area in which multiple (two, in the illustrated example) snow melting devices (particular snow melting devices) **4** are located. The multiple particular snow melting devices **4** are individually located in multiple spaces (residences **H).**

First, the relay controller **2** can determine whether a resident is present for each of the residences **H11** and **H12,** based on the stay-at-home information sent from each of the slave controllers 3 of the residences **H11** and **H12.** The relay controller **2** periodically receives data on the power consumptions of the snow melting devices **4** of the residences **H11** and **H12** from the slave controllers 3 of the residences **H11** and H12, and therefore can use data on the power consumptions of the snow melting devices 4 of the residences **H11** and **H12.** Further, the relay controller 2 receives information on the power consumption decreasing rate **K1** of the region **B1** from the master controller 1.

When receiving the information on the power consumption decreasing rate **K1,** the relay controller **2** determines the power consumptions to be allocated to the snow melting devices **4** of the residences **H11** and **H12** in order to achieve the power consumption decreasing rate **K1** of the region **B1**.

In more detail, to achieve the power consumption decreasing rate **K1** of the region **B1,** the relay controller **2** determines the decreasing rates of the power consumptions of the individual residences **H11** and **H12,** based on whether the resident is present in the residence **H11** and whether the resident is present in the residence **H12.** For example, the relay controller 2 determines that the need for the snow melting device **4** is low for a residence **H** in which the resident is absent, and thus increases the decreasing rate of the power consumption. Further, the relay controller 2 determines that the need for the snow melting device 4 is high for a residence **H** in which the resident is present, and thus decreases the decreasing rate of the power consumption.

For example, the power consumptions in the residences **H11** and **H12** before the center server **CS** sends the **DR** signal are supposed to be **PH31** and **PH32,** respectively.

When the center server **CS** sends the **DR** signal and then the relay controller **2** receives information on the power consumption decreasing rate **K1** from the master controller 1, the relay controller 2 decreases the power consumption to be allocated to the residences **H11** and **H12.**

In more detail, the relay controller 2 allocates the power consumptions **PH41 (<PH31)** and **PH42** (<**PH32**) to the residences **H11** and **H12,** respectively. In this regard, when the power consumption decreasing amount **ΔPH1** of the residence **H11** is supposed to be equal to **PH31** minus **PH41,** and the power consumption decreasing amount **ΔPH2** of the residence **H12** is supposed to be equal to **PH32** minus **PH42** (see **FIG. 8****),** the power consumption decreasing amount **ΔP1** of the region **B1** is equal to **ΔPH1** plus **ΔPH2**.

In this case, the power consumption decreasing rate **KH1** of the residence **H11** is equal to **ΔPH1/PH31** and the power consumption decreasing rate **KH2** of the residence **H2** is equal to **ΔPH2/PH32** (see **FIG. 8****).**

Additionally, the relay controller 2 determines the power consumption decreasing rates **KH1** and **KH2** of the respective residences **H11** and **H12** based on whether the resident is present in the residence **H11** and whether the resident is present in the residence **H12.** For example, when the resident is absent in the residence **H11** and the resident is present in the residence **H12,** the power consumption decreasing rate **KH1** of the residence **H11** is set to be higher than the power consumption decreasing rate **KH2** of the residence **H12.**

The relay controller 2 sends information on the power consumption decreasing rate **KH1** to the slave controller **3** of the residence **H11**, and sends information on the power consumption decreasing rate **KH2** to the slave controller 3 of the residence H12.

As a result, the slave controller 3 of the residence **H11** decreases the power consumption of the snow melting device **4** as the associated control target by the power consumption decreasing rate **KH1.** Additionally, the slave controller 3 in the residence **H12** decreases the power consumption of the snow melting device **4** as the associated control target by the power consumption decreasing rate **KH2.**

Note that, similarly, in each of the regions **B2** and **B3,** the controller **2** determines a decreasing rate of a power consumption of each residence **H** based on stay-at-home information of each residence **H.**

As apparent from the above, the decreasing rates of the power consumptions in the residences **H** are determined based on whether a resident of each residence H is present. Therefore, it is possible to decrease feelings of injustice of users in distribution of power for melting snow in a process of decreasing power consumptions.

Further, the slave controller **3** of the residence **H** controls operation of the snow melting device **4** in the residence **H** based on whether an automobile is present in a parking space of the residence **H.**

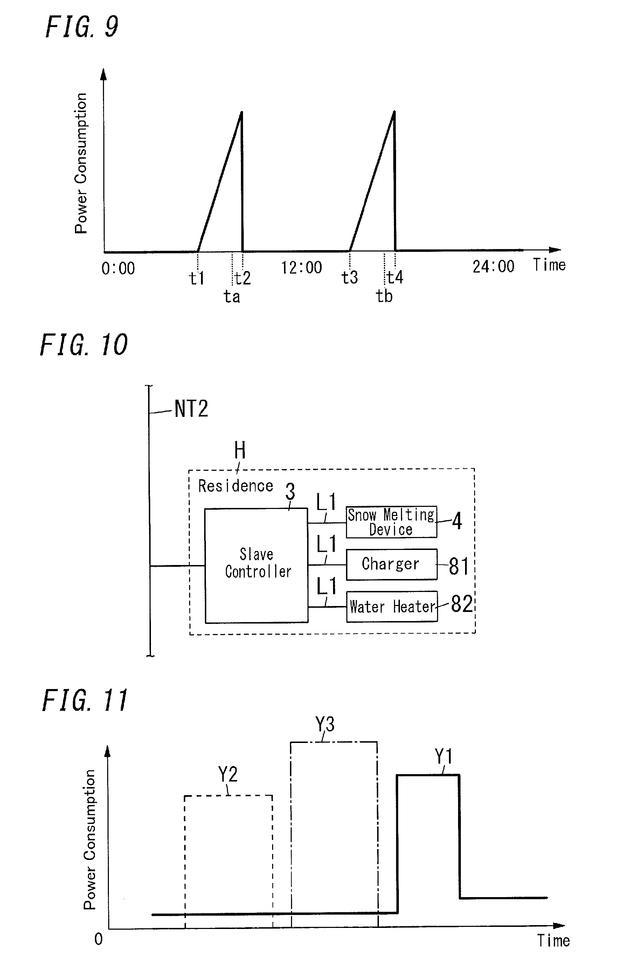

For example, as shown in **FIG. 9****,** the slave controller **3** can know time ta at which the resident of the residence **H** goes out by automobile and time tb at which the resident of the residence **H** returns home by automobile, based on the automobile use schedule obtained by the entering-and-leaving information obtaining device **72.**

The slave controller 3 starts the operation of the snow melting device **4** at time **t1** prior to outgoing time ta, and ends the operation of the snow melting device **4** at time **t2** subsequent to the outgoing time ta. Further, the slave controller **3** starts the operation of the snow melting device **4** at time **t3** prior to returning time tb, and ends the operation of the snow melting device **4** at time **t4** subsequent to the returning time tb.

In summary, the slave controller 3 operates the snow melting device **4** in synchronization with the outgoing time ta and the returning time tb by automobile and thereby melts snow between the garage and the road. Further, when for long term there is no schedule in which the resident of the residence **H** goes out by automobile, the slave controller 3 does not allow the snow melting device **4** to melt snow between the garage and the road.

Further, when the resident of the residence **H** is absent for long term, to prevent damages on a roof of the residence **H,** the slave controller 3 of the residence **H** may activate the snow melting device **4** on the roof, periodically.

Additionally, the slave controller 3 of the residence H may prohibit the operation of the snow melting device **4** on the roof in a time period in which the resident of the residence **H** is inferred to pass through a space under an eave of the residence **H,** based on the outgoing schedule of the resident. This is to avoid a situation where melted snow on the roof falls on the resident passing through the space under the eave.

As apparent from the above, by controlling the operation of the snow melting device **4** based on the activity information of the resident of the residence **H,** it is possible to make control contents of the snow melting device **4** be suitable for the living activity of the resident. Note that, operation control of the snow melting device **4** based on the activity information of the resident of the residence **H** is executed irrespective of whether the **DR** signal is sent from the center server **CS.**

As described above, the snow melting controller 10 of the present embodiment determines a decreasing degree of a power consumption of a snow melting device 4 for each space (residence **H),** based on an amount of snow cover of each area **B,** meteorological information of each area **B,** and activity information of a user entering and leaving each space (residences **H)** in which a snow melting device **4** is located.

In other words, the snow melting controller **10** of the present embodiment includes the following ninth and tenth features in addition to the aforementioned first to sixth features. Note that, in the present embodiment, the second to sixth and tenth features are optional.

In the ninth feature, the multiple areas B include a particular area in which multiple particular snow melting devices **4** are located. The multiple particular snow melting devices **4** are individually located in multiple spaces (residences **H)** in the particular area. The snow melting controller **10** is configured to determine a decreasing degree of a power consumption of a particular snow melting device **4** for each of the multiple spaces (residences **H),** based on activity information of a user of each of the multiple spaces (residences H).

In the tenth feature realized in combination with the ninth feature, each of the multiple spaces is a residence **H.** The user is a resident of the residence **H.** The activity information is information indicative of whether the resident is present in the residence.

Further, the snow melting managing system of the present embodiment includes the aforementioned snow melting controller 10 and at least one information obtaining device 7 configured to obtain an amount of snow cover and meteorological information of each of multiple areas **B** and provide the amount of snow cover and the meteorological information of each of multiple areas **B** to the snow melting controller **10.**

### (Embodiment 4)

The present embodiment is described with reference to the configuration of the residence **H** shown in **FIG. 10****.** Note that, the components of the present embodiment which are same as components of any of Embodiments 1 to 3 are designated by the same reference signs as the corresponding Embodiment to omit explanations thereof.

In the present embodiment, the slave controller 3 of the residence **H** is connected to additional electric devices (particular devices) such as a charger **81** for electric vehicles and a water heater **82** through the control line **L1** so as to allow the slave controller **3** to communicate with the additional electric devices, in addition to the snow melting device **4.**

The snow melting controller **10** of the present embodiment is configured to perform cooperative control of controlling the certain snow melting device **4** in cooperation with the particular device (e.g., the charger **81** and the water heater **82).** The particular device is a device to receive power from a power source same as a power source for supplying power to the certain snow melting device **4,** for example.

The snow melting controller **10** is configured to, in the cooperative control, control the certain snow melting device **4** and the particular device so that a time period in which a power consumption of the certain snow melting device **4** peaks does not overlap a time period in which a power consumption of the particular device peaks. Note that, in the present embodiment, the cooperative control is performed by the slave controller **3.**

For example, when the management server CS provides a request of decreasing the power consumption by use of the DR signal, the slave controller 3 performs the cooperative control so that the time period in which the power consumption of the snow melting device **4** peaks, the time period in which the power consumption of the charger **81** peaks and the time period in which the power consumption of the water heater **82** peaks do not overlap each other, as shown in **FIG. 11****.** Note that, in **FIG. 11****, Y1, Y2,** and **Y3** represent the power consumptions of the snow melting device **4,** the charger **81,** and the water heater 82, respectively.

Therefore, in the process of requesting a decrease in the power consumption, the slave controller **3** can operate multiple electric devices while suppressing peaks of power demand. In summary, it is possible to achieve both decreasing of the power consumption and ensuring of user's convenience.

Further, in the process of requesting a decrease in the power consumption, when an amount of power demand comes close to an amount of power supply, the center server CS provides information on such a situation to the slave controller **3** through the master controller **1** and the relay controller **2.**

The slave controller **3** preliminarily allocates priorities to the snow melting device **4,** the charger **81,** and the water heater **82** individually. The slave controller 3 ends operations of the electric devices sequentially in the order from the lowest priority to the highest priority until the amount of power demand becomes sufficiently lower than the amount of power supply.

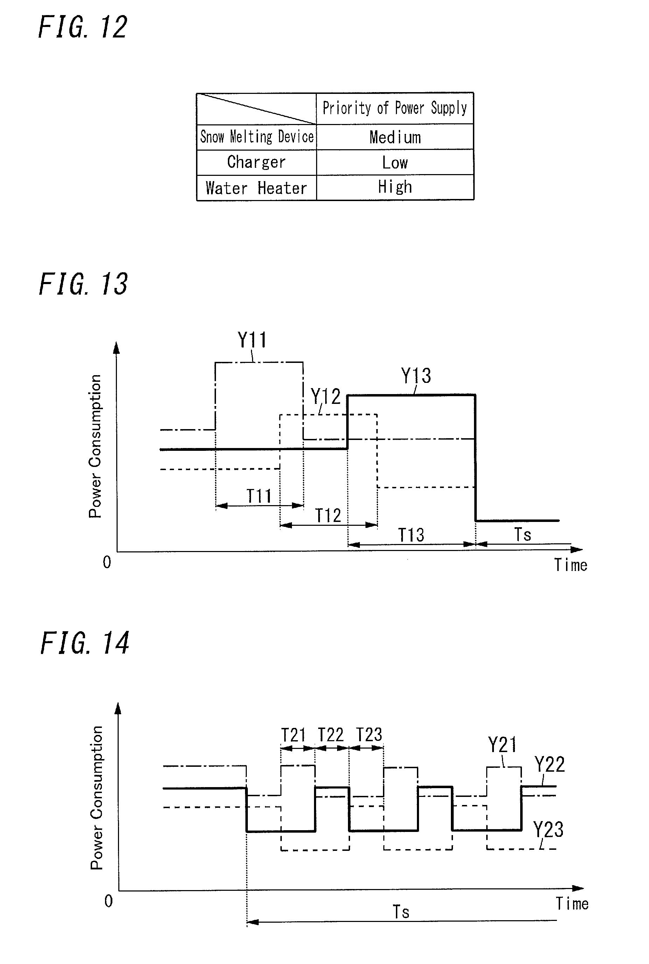

For example, as shown in **FIG. 12****,** when the priority of the water heater **82** is set to be high, and the priority of the snow melting device **4** is set to be medium, and the priority of the charger **81** is set to be low, the slave controller **3** ends operations of the charger **81,** the snow melting device **4,** and the water heater **82** in this order.

Consequently, in adjustment of power demand, the slave controller **3** can continue the operation of the important electric device as long as possible, and therefore the user's convenience can be ensured.

As described above, the snow melting controller **10** of the present embodiment controls the operation of the snow melting device **4** in cooperation with another device.

In other words, the snow melting controller 10 of the present embodiment includes the following eleventh and twelfth features in addition to the aforementioned first to sixth features. Note that, in the present embodiment, the second to sixth and twelfth features are optional. Additionally, the snow melting controller **10** of the present embodiment may include the seventh and eighth features. Alternatively, the snow melting controller 10 of the present embodiment may include the ninth and tenth features.

In the eleventh feature, the snow melting controller **10** is configured to perform cooperative control of controlling a certain snow melting device **4** of the multiple snow melting devices **4** in cooperation with a particular device (e.g., the charger **81** and the water heater **82).**

In the twelfth feature realized in combination with the eleventh feature, the particular device is a device to receive power from a power source same as a power source for supplying power to the certain snow melting device **4.** The snow melting controller **10** is configured to, in the cooperative control, control the certain snow melting device **4** and the particular device so that a time period in which a power consumption of the certain snow melting device **4** peaks does not overlap a time period in which a power consumption of the particular device peaks.

Further, the snow melting managing system of the present embodiment includes the snow melting controller **10** including the aforementioned feature(s) and at least one information obtaining device **7** configured to obtain an amount of snow cover and meteorological information of each of multiple areas **B** and provide the amount of snow cover and the meteorological information of each of multiple areas **B** to the snow melting controller **10.**

Note that, the slave controller **3** may update the priorities of the snow melting device **4,** the charger **81,** and the water heater **82** anytime based on the meteorological information, the amount of snow cover information, the outgoing schedule of the resident, the automobile use schedule, and the condition of a storage battery or a heat accumulator which is provided to the residence **H** but is not shown in the drawings.

### (Embodiment 5)

The present embodiment includes the same components as any of Embodiments 1 to 4, and such components are designated by the same reference signs as the corresponding Embodiment to omit explanations thereof.

The DR signal which is sent from the center server CS to the master controller 1 contains the information on the desired decreasing value Pm of the total power consumption of the wide area A, and further contains information on a time period (decreasing time period) allowing the request of decreasing the power consumption. Additionally, the information on the power consumption decreasing rate **K1** which is sent from the master controller **1** to the relay controllers 2 of the respective regions **B1** to B3 contains information on the decreasing time period.

The relay controller 2 of each of the regions **B1** to **B3** temporarily increases the power consumption of the snow melting device **4** of each residence **H** in the region managed by the relay controller **2** before the decreasing time period to preliminarily melt snow in order to suppress occurrence of trouble due to snow cover during the decreasing time period.

In more detail, the demand response signal includes the information on the decreasing time period **Ts** indicative of a time period allowing the snow melting controller **10** to perform the decreasing process. The snow melting controller **10** is configured to allow a snow melting device **4** to operate at a power equal to or more than a predetermined power in a predetermined time period prior to the decreasing time period **Ts** and decrease a power consumption of this snow melting device **4** in accordance with the decreasing degree in the decreasing time period **Ts.** In the present embodiment, this process is performed by the relay controller **2.**

When the power consumptions of the snow melting devices **4** of all the residences **H** are increased simultaneously, the peak of power demand is likely to increase sharply.

In view of this, with regard to each of the regions **B1** to **B3,** timings (predetermined time periods) when the snow melting devices **4** in the regions **B** increase power consumptions are differed between the residences **H.** Thereby, the peak of power demand is suppressed. In other words, the snow melting controller **10** allocates different predetermined time periods to multiple spaces (residences **H)** in the same area **B.**

For example, **FIG. 13** shows the power consumptions in the residences **H11** to **H13** in the region **B1**. **Y11** represents the power consumption of the snow melting device **4** of the residence **H11**. **Y12** represents the power consumption of the snow melting device **4** of the residence **H12. Y13** represents the power consumption of the snow melting device **4** of the residence **H13.**

Before the decreasing time period **Ts** of the region **B1,** a time period (power increasing time period) **T11** in which the power consumption **Y11** is increased temporarily, a time period (power increasing time period) **T12** in which the power consumption **Y12** is increased temporarily, and a time period (power increasing time period) **T13** in which the power consumption **Y13** is increased temporarily are selected so as not to overlap each other. Thereby, the peak of power demand is suppressed.

Note that, in **FIG. 13****,** some of the power increasing time periods **T11** to **T13** of the residences **H11** to **H13** overlap each other. However, all of the power increasing time periods **T11** to **T13** do not overlap each other simultaneously. Therefore, it is possible to contribute suppressing the peak of power demand.

As described above, in the snow melting controller **10** of the present embodiment, the demand response signal includes information on the decreasing time period Ts in which decreases in power consumptions in multiple areas **B** are required. The snow melting controller 10 controls the operations of the snow melting devices **4** so as to keep power used by the snow melting device **4** equal to or more than a predetermined value before the decreasing time period **Ts** and decrease the power consumption of the snow melting device **4** in accordance with the decreasing degree in the decreasing time period **Ts.**

In other words, the snow melting controller 10 of the present embodiment includes the following thirteenth feature in addition to the aforementioned first to sixth features. Note that, in the present embodiment, the second to fifth features are optional.

In the thirteenth feature, the demand response signal includes information on the decreasing time period **Ts** allowing the snow melting controller **10** to perform the decreasing process. The snow melting controller **10** is configured to allow a snow melting device **4** to operate at a power equal to or more than a predetermined power in a predetermined time period prior to the decreasing time period **Ts** and decrease a power consumption of this snow melting device **4** in accordance with the decreasing degree in the decreasing time period **Ts.**

Further, the relay controller **2** may perform intermittent operation of changing power consumptions of the snow melting devices **4** in turn in the decreasing time period **Ts.** In other words, the snow melting controller **10** operates multiple snow melting devices **4** located in the same area **B** sequentially in turn, in the decreasing time period **Ts.** In the present embodiment, this process is performed by the relay controller **2.**

**FIG. 14** shows the power consumptions in the residences **H11** to **H13** in the region **B1**. **Y21** represents the power consumption of the snow melting device **4** of the residence **H11**. **Y22** represents the power consumption of the snow melting device **4** of the residence **H12. Y23** represents the power consumption of the snow melting device **4** of the residence **H13.**

In the decreasing time period **Ts,** the snow melting controller **10** operates the snow melting device **4** of the residence **H11**, the snow melting device 4 of the residence **H12,** and the snow melting device **4** of the residence **H13** in this order in turn. As described above, in the decreasing time period **Ts,** the power consumptions **Y21** to **Y23** are changed intermittently, and the periods **T21** to **T23** for increasing the power consumptions **Y21** to **Y23** are differed. Thereby, the peak of power demand is more suppressed.

In brief, in the snow melting controller 10 of the present embodiment, the demand response signal includes information on the decreasing time period **Ts** in which decreases in power consumptions in multiple areas **B** are required. The snow melting controller **10** controls the operations of the snow melting devices **4** so as to perform intermittent operation of changing the power consumptions of the snow melting devices **4** in turn in the decreasing time period **Ts.**

In other words, the snow melting controller **10** of the present embodiment may include the following fourteenth feature instead of the thirteenth feature.

In the fourteenth feature, the demand response signal includes information on the decreasing time period **Ts** allowing the snow melting controller **10** to perform the decreasing process. The snow melting controller **10** is configured to allow multiple snow melting devices **4** located in the same area **B** to operate in turn in the decreasing time period **Ts.**

Note that, the snow melting controller 10 of the present embodiment may include the seventh and eighth features. Alternatively, the snow melting controller **10** of the present embodiment may include the ninth and tenth features.

Further, the snow melting managing system of the present embodiment includes the snow melting controller **10** including the aforementioned feature(s) and at least one information obtaining device 7 configured to obtain an amount of snow cover and meteorological information of each of multiple areas **B** and provide the amount of snow cover and the meteorological information of each of multiple areas **B** to the snow melting controller **10.**

Note that, in each Embodiment, the space in which the snow melting device **4** is located is not limited to the residence **H** but may be another space such as stores, business premises, and offices.

## Claims

1. A snow melting controller configured to manage multiple snow melting devices located in multiple areas,
the snow melting controller being configured to perform a decreasing process of decreasing a total power consumption of the multiple snow melting devices, and
the snow melting controller being configured to, in the decreasing process, determine a decreasing degree of a power consumption of a snow melting device for each of the multiple areas, based on an amount of snow cover and meteorological information of each of the multiple areas.

2. The snow melting controller according to claim 1, wherein
the snow melting controller is configured to decrease a power consumption of a snow melting device in accordance with a decreasing degree with regard to each of the multiple areas.

3. The snow melting controller according to claim 2, further comprising:
multiple slave controllers configured to individually control the multiple snow melting devices; and
a master controller configured to communicate with the multiple slave controllers,
the master controller being configured to perform the decreasing process,
the master controller being configured to send a decreasing degree to a slave controller located in an area associated with the decreasing degree, and
each of the multiple slave controllers being configured to, when receiving the decreasing degree, decrease a power consumption of a corresponding one of the multiple snow melting devices in accordance with the received decreasing degree.

4. The snow melting controller according to claim 1, wherein
the snow melting controller is configured to, in the decreasing process, increase the decreasing degree of the power consumption with a decrease in the amount of snow cover.

5. The snow melting controller according to claim **1,** wherein:
the meteorological information contains an atmosphere temperature; and
the snow melting controller is configured to, in the decreasing process, increase a decreasing degree of a power consumption with an increase in the atmosphere temperature.

6. The snow melting controller according to claim **1,** wherein:
the multiple areas include a particular area in which multiple particular snow melting devices are located;
the multiple particular snow melting devices are individually located in multiple spaces in the particular area; and
the snow melting controller is configured to determine a decreasing degree of a power consumption of a particular snow melting device for each of the multiple spaces, based on attribute information of a user of each of the multiple spaces.

7. The snow melting controller according to claim **6,** wherein:
each of the multiple spaces is a residence;
the user is a resident of the residence; and
the attribute information contains at least one of a sex, an age, and a health condition of the resident.

8. The snow melting controller according to claim **1,** wherein:
the multiple areas include a particular area in which multiple particular snow melting devices are located;
the multiple particular snow melting devices are individually located in multiple spaces in the particular area; and
the snow melting controller is configured to determine a decreasing degree of a power consumption of a particular snow melting device for each of the multiple spaces, based on activity information of a user of each of the multiple spaces.

9. The snow melting controller according to claim **8,** wherein:
each of the multiple spaces is a residence;
the user is a resident of the residence; and
the activity information is information indicative of whether the resident is present in the residence.

10. The snow melting controller according to claim **1,** wherein:
the snow melting controller is configured to perform cooperative control of controlling a certain snow melting device of the multiple snow melting devices in cooperation with a particular device.

11. The snow melting controller according to claim **10,** wherein:
the particular device is a device to receive power from a power source same as a power source for supplying power to the certain snow melting device; and
the snow melting controller is configured to, in the cooperative control, control the certain snow melting device and the particular device so that a time period in which a power consumption of the certain snow melting device peaks does not overlap a time period in which a power consumption of the particular device peaks.

12. The snow melting controller according to claim **1,** wherein
the snow melting controller is configured to, when receiving a demand response signal of requesting of performing the decreasing process, perform the decreasing process.

13. The snow melting controller according to claim **12,** wherein:
the demand response signal includes information on a decreasing time period allowing the snow melting controller to perform the decreasing process; and
the snow melting controller is configured to allow a snow melting device to operate at a power equal to or more than a predetermined power in a predetermined time period prior to the decreasing time period and decrease a power consumption of this snow melting device in accordance with the decreasing degree in the decreasing time period.

14. The snow melting controller according to claim **12,** wherein:
the demand response signal includes information on a decreasing time period allowing the snow melting controller to perform the decreasing process; and
the snow melting controller is configured to allow multiple snow melting devices located in the same area to operate in turn in the decreasing time period.

15. A snow melting managing system, comprising:
the snow melting controller according to claim 1; and
at least one information obtaining device configured to obtain an amount of snow cover and meteorological information of each of multiple areas and provide the amount of snow cover and the meteorological information of each of multiple areas to the snow melting controller.
